# EUROPEAN PATENT SPECIFICATION

(11) **EP 4 276 985 B1**
(45) Date of publication and mention of the grant of the patent: **14.01.2026**
(21) Application number: 23168495.2
(22) Date of filing: 18.04.2023
(51) Int. Cl.: H01M 50/103, H01M 50/184, H01M 50/186, H01M 50/627, H01M 50/15, H01M 50/636

(54) **BATTERY**
BATTERIE
BATTERIE

(30) Priority: 10.05.2022 JP 2022077656
(43) Date of publication of application: 15.11.2023
(73) Proprietor: Prime Planet Energy & Solutions, Inc., Tokyo 103-0022 (JP)
(72) Inventor: WAKIMOTO, Ryoichi, Tokyo, 103-0022 (JP)
(74) Representative: Kuhnen & Wacker Patent- und Rechtsanwaltsbüro PartG mbB

(56) References cited:
- EP-A1- 1 037 292
- EP-A1- 3 029 754
- WO-A1-2021/233080
- JP-A- 2015 141 872
- JP-A- 2017 091 721
- JP-A- 2017 135 025
- US-A1- 2011 183 196
- US-A1- 2014 004 411

## Description

### BACKGROUND OF THE DISCLOSURE

### 1. Field

The present application relates to batteries.

### 2. Background

A battery known in the art includes: an exterior body including an opening; a closing plate including an electrolytic solution injection hole and closing the opening of the exterior body; a sealing member sealing the electrolytic solution injection hole; an electrode body housed in the exterior body; and an electrolytic solution stored in the exterior body. A technique related to such a battery is disclosed in, for example, JP 2017-135025 A. The technique disclosed in JP 2017-135025 A involves: housing an electrode body in an exterior body; closing an opening of the exterior body with a closing plate; injecting an electrolytic solution into a battery case through an electrolytic solution injection hole of the closing plate; and welding a sealing member to a portion of the battery case (or more specifically, a portion of the closing plate) defining a peripheral edge of the electrolytic solution injection hole, such that a battery is sealed airtightly (or closed hermetically).

Further, patent document US 2014/004411 A1 discloses a sealed battery that includes a battery case and a seal member, wherein the battery case includes a pour hole member provided with a pour hole and houses a charge-discharge element. The seal member seals the pour hole, the seal member is butt-welded with the pour hole member, at least a portion at which a reverse surface of the seal member faces the pour hole member each other having a flow channel, and the flow channel extends from a welded site to an opening portion of the pour hole.

Patent document WO 2021/233080 A1 discloses an end cover assembly, a battery cell, a battery pack, a device and a liquid injection method. The end cover assembly comprises: an end cover plate, comprising a through hole for injecting an electrolyte, and a fixing portion arranged around the through hole; and a nail body, comprising an accommodating portion for accommodating the fixing portion, wherein the accommodating portion is annular and comprises two inner walls that are arranged at an interval in a radial direction of the accommodating portion; and an inner wall and an outer wall of the fixing portion respectively cooperate with the two inner walls of the nail body in an abutting manner so as to seal the through hole. The annular accommodating portion can provide limitation in two directions for the fixing portion, such that the fixing portion is stressed in a balanced manner, the fixing portion can be prevented from inclining and deforming, the contact area between the nail body and the fixing portion can also be increased, and the sealing effect is improved.

Moreover, patent document EP 1 037 292 A1 discloses a sealed battery with a generator element enclosed within an external casing. An opening in the external casing is covered by a closure cap in which an injection hole for injecting electrolyte is provided. The injection hole is sealed using a sealing plug which is composed of a support member that is fixed on a surface of the closure cap so as to cover the injection hole and a plugging member that is at least partially formed of an elastic material and is supported by the support member so as to plug the injection hole. The plugging member is formed of an elastic material and is pressed into the injection hole by the support member. As a result, an airtight seal can be easily and securely achieved for the injection hole. The support member can be made large to facilitate handling, thereby reducing the likelihood of the sealing plug being improperly supplied during attachment to the injection hole.

In addition, patent document US 2011/183196 A1 discloses a sealed battery which includes a battery case formed with a liquid inlet, a power generating element contained in the battery case, and a lid member closing the liquid inlet, the peripheral edge of the lid member being welded to the battery case over the entire circumference. The battery further includes a circular groove provided in the outer surface of the battery case and around the entire periphery of the liquid inlet to face the back surface of the lid member, a peripheral portion provided over the entire periphery of a portion in the back surface of the lid member facing the liquid inlet to face the circular groove, and a protrusion partially placed around the liquid inlet between the circular groove and the peripheral portion to form a clearance between the circular groove and the peripheral portion. The space facing the inner surface in a portion melted during welding between the peripheral edge of the lid member and the battery case is continuous to the liquid inlet through a clearance formed by the protrusion between the circular groove and the peripheral portion.

### SUMMARY

When a battery containing an electrolytic solution is repeatedly charged and discharged or stored in a high-temperature environment, for example, the electrolytic solution may volatilize, which may fill the inside of the battery with gas. Thus, an increase in internal pressure of the battery may warp a closing plate, causing deformation of a portion of a battery case (or more specifically, a portion of the closing plate) in the vicinity of an electrolytic solution injection hole. This may result in damage to or breakage of a portion of the battery case (or more specifically, a portion of the closing plate) to which a sealing member is welded. Studies conducted by the inventor of the present application suggest that a high-capacity or large-size battery to be used, in particular, as a power source (such as a vehicle driving power source) includes a closing plate large in size and/or contains a large amount of electrolytic solution and thus has a pronounced tendency to encounter the problems mentioned above.

Accordingly, it is an object of the present invention to provide batteries each of which prevents or reduces deformation of a portion of a battery case in the vicinity of an electrolytic solution injection hole and thus resists damage to or breakage of a connection between the battery case and a sealing member.

The above object is solved by the subject-matter of claim 1. Further advantageous configurations of the invention can be drawn from the dependent claims.

An explanatory aspect of the present application provides a battery including: an electrode body including a positive electrode and a negative electrode; an electrolytic solution; a battery case housing the electrode body, storing the electrolytic solution, and including an electrolytic solution injection hole; and a sealing member connected to a portion of the battery case defining a peripheral edge of the electrolytic solution injection hole, such that the electrolytic solution injection hole is sealed with the sealing member. A surface of the battery case facing the electrode body includes a protrusion located around the electrolytic solution injection hole and protruding toward the electrode body.

The explanatory aspect of the present application involves providing the protrusion, which protrudes toward the electrode body, on the surface of the battery case facing the electrode body. This explanatory aspect is thus able to increase the rigidity of a portion of the battery case in the vicinity of the electrolytic solution injection hole. Accordingly, this explanatory aspect is able to prevent or reduce deformation of the portion of the battery case in the vicinity of the electrolytic solution injection hole during an increase in internal pressure more effectively than when no protrusion is provided. Consequently, this explanatory aspect is able to prevent damage to or breakage of a connection between the battery case and the sealing member, resulting in increased reliability of the connection.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a schematic perspective view of a battery according to an embodiment of the present application.
FIG. 2 is a schematic longitudinal cross-sectional view of the battery taken along the line II-II in FIG. 1.
FIG. 3 is a schematic longitudinal cross-sectional view of a portion of the battery in the vicinity of an electrolytic solution injection hole illustrated in FIG. 2.
FIG. 4 is a partially cutaway perspective view of the battery, schematically illustrating the portion of the battery in the vicinity of the electrolytic solution injection hole.
FIG. 5 is a schematic perspective view of an electrode body assembly attached to a closing plate.
FIG. 6A is a diagram illustrating a welding track during a first welding process included in a laser welding method according to the embodiment of the present application.
FIG. 6B is a diagram illustrating a welding track during a second welding process included in the laser welding method.

### DETAILED DESCRIPTION OF THE PREFERRED EMBODIMENTS

Preferred embodiments of batteries disclosed herein will be described below with reference to the drawings. Matters that are necessary for carrying out the present application but are not specifically mentioned herein (e.g., common battery structures and manufacturing processes that do not characterize the present application) may be understood by those skilled in the art as design matters based on techniques known in the related art. The batteries disclosed herein may be provided on the basis of the description given herein and common technical knowledge in the related art.

As used herein, the term "battery" refers to any of various electricity storage devices from which electric energy is derivable, and is a concept encompassing primary batteries and secondary batteries. As used herein, the term "secondary battery" refers to any of various electricity storage devices that are repeatedly chargeable and dischargeable, and is a concept encompassing storage batteries (or chemical batteries), such as lithium ion secondary batteries and nickel-metal hydride batteries, and capacitors (or physical batteries), such as electric double layer capacitors.

Components and elements having the same functions are identified by the same reference signs in the drawings below, and description thereof may be simplified or omitted when deemed redundant.

### Battery 100

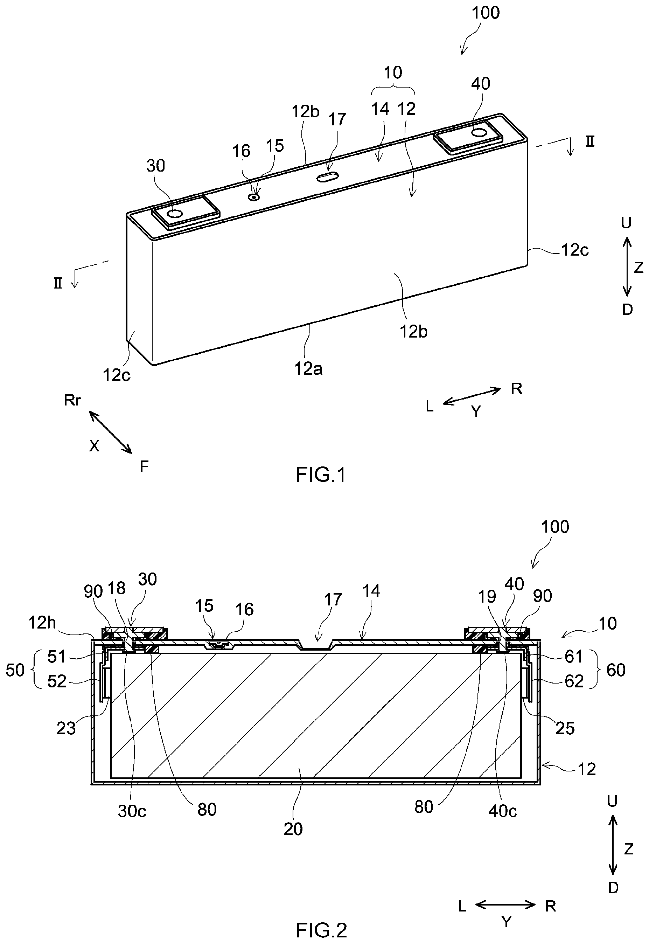

FIG. 1 is a perspective view of a battery 100. FIG. 2 is a schematic longitudinal cross-sectional view of the battery 100 taken along the line II-II in FIG. 1. In the following description, the reference signs L, R, F, Rr, U, and D in the drawings respectively represent left, right, front, rear, up, and down. A direction along the short sides of the battery 100 in a plan view will hereinafter be referred to as a "short-side direction X". A direction along the long sides of the battery 100 in the plan view and perpendicular or substantially perpendicular to the short-side direction X will hereinafter be referred to as a "long-side direction Y". A direction along the height of the battery 100 will hereinafter be referred to as an "up-down direction Z". These directions, however, are defined merely for the sake of convenience of description and do not limit in any way how the battery 100 may be installed.

As illustrated in FIG. 2, the battery 100 includes a battery case 10, an electrode body assembly 20, a positive electrode terminal 30, a negative electrode terminal 40, a positive electrode collector 50, a negative electrode collector 60, and an electrolytic solution (not illustrated). The battery 100 is preferably a secondary battery. The battery 100 is more preferably a nonaqueous electrolytic solution secondary battery. In the present embodiment, the battery 100 is a lithium ion secondary battery.

The battery case 10 is a casing housing the electrode body assembly 20 and storing the electrolytic solution. As illustrated in FIG. 1, the battery case 10 in the present embodiment has a flat cuboidal outer shape (or rectangular outer shape) with a bottom. The battery case 10 preferably has a rectangular outer shape. The battery case 10 may be made of any material known in the art or may be made of any other suitable material. The battery case 10 is preferably made of metal. The battery case 10 is more preferably made of, for example, aluminum, an aluminum alloy, iron, or an iron alloy. A battery case preferably includes: an exterior body including an opening; and a closing plate (or lid) closing the opening. As illustrated in FIG. 2, the battery case 10 in the present embodiment includes: an exterior body 12 including an opening 12h; and a closing plate (or lid) 14 closing the opening 12h.

As illustrated in FIG. 1, the exterior body 12 includes: a bottom wall 12a; a pair of long side walls 12b extending from the bottom wall 12a and facing each other; and a pair of short side walls 12c extending from the bottom wall 12a and facing each other. The bottom wall 12a has a substantially rectangular shape. The bottom wall 12a faces the opening 12h. In the plan view, the long side walls 12b are larger in area than the short side walls 12c.

The closing plate 14 is attached to the exterior body 12 such that the opening 12h of the exterior body 12 is closed with the closing plate 14. The closing plate 14 faces the bottom wall 12a of the exterior body 12. The closing plate 14 has a substantially rectangular shape in the plan view. The closing plate 14 is connected (or preferably welded) to a portion of the exterior body 12 defining a peripheral edge of the opening 12h and is thus integral with the exterior body 12. Accordingly, the battery case 10 is sealed airtightly (or closed hermetically).

As illustrated in FIG. 2, the closing plate 14 is provided with: an electrolytic solution injection hole 15; a discharge valve 17; a first through hole 18 through which the positive electrode terminal 30 is inserted; and a second through hole 19 through which the negative electrode terminal 40 is inserted. Once the pressure inside the battery case 10 is equal to or higher than a predetermined pressure, the discharge valve 17 breaks such that gas inside the battery case 10 is discharged out of the battery case 10. The through holes 18 and 19 each pass through the closing plate 14 in the up-down direction Z. The through hole 18 has an inside diameter that allows insertion of the positive electrode terminal 30 therethrough before the positive electrode terminal 30 is attached to the closing plate 14 (i.e., before the positive electrode terminal 30 is subjected to swaging). The through hole 19 has an inside diameter that allows insertion of the negative electrode terminal 40 therethrough before the negative electrode terminal 40 is attached to the closing plate 14 (i.e., before the negative electrode terminal 40 is subjected to swaging).

After the closing plate 14 is assembled to the exterior body 12, the electrolytic solution is injected into the battery case 10 through the electrolytic solution injection hole 15. The electrolytic solution injection hole 15 is preferably defined in the closing plate 14. A surface of the battery case 10 provided with the electrolytic solution injection hole 15 (which is, in the present embodiment, defined by the closing plate 14) may have any suitable length in the short-side direction X. When the battery 100 is of a high-capacity type to be mounted on a vehicle, the surface of the battery case 10 (which is provided with the electrolytic solution injection hole 15) preferably has a length of 20 mm or more in the short-side direction X and more preferably has a length of 25 mm or more in the short-side direction X. When the surface of the battery case 10 (which is provided with the electrolytic solution injection hole 15) has a long length in the short-side direction X as just mentioned, an increase in internal pressure, in particular, makes it likely that the closing plate 14 will deform and warp, applying a large load on a portion of the battery case 10 in the vicinity of the electrolytic solution injection hole 15. Accordingly, the use of the techniques disclosed herein is particularly effective in solving this problem.

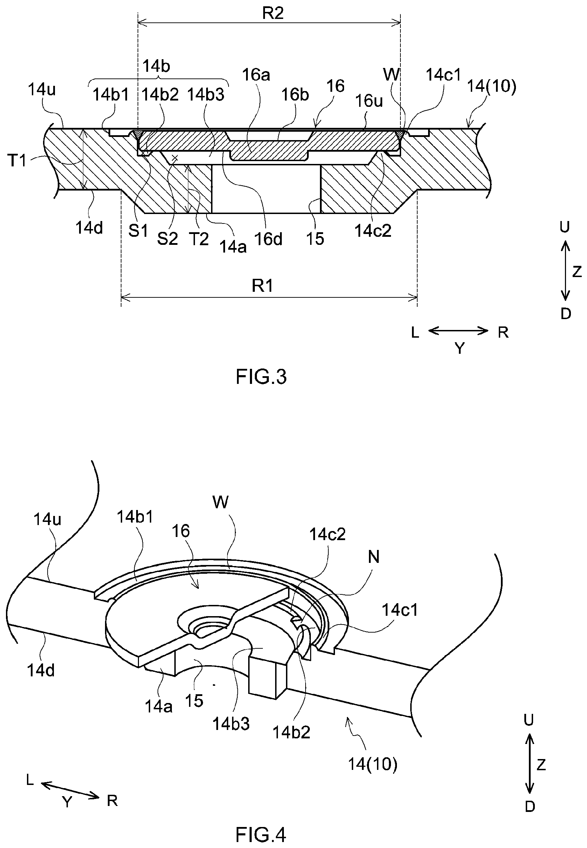

FIG. 3 is a schematic longitudinal cross-sectional view of a portion of the battery 100 in the vicinity of the electrolytic solution injection hole 15. FIG. 4 is a partially cutaway perspective view of the battery 100, schematically illustrating the portion of the battery 100 in the vicinity of the electrolytic solution injection hole 15. As illustrated in FIGS. 1 to 4, the electrolytic solution injection hole 15 is sealed with a sealing member (or sealing cap) 16. The sealing member 16 is preferably made of metal. The sealing member 16 is more preferably made of, for example, aluminum or an aluminum alloy. As illustrated in FIG. 4, the electrolytic solution injection hole 15 and the sealing member 16 each have a substantially circular outer shape in the plan view. The sealing member 16 preferably has a circular outer shape. Alternatively, the sealing member 16 may have any other suitable shape other than a circular shape. As illustrated in FIG. 3, the sealing member 16 has an outside diameter R2 larger than the outside diameter of the electrolytic solution injection hole 15. As illustrated in FIGS. 3 and 4, the electrolytic solution injection hole 15 in the present embodiment is sealed by connecting (e.g., welding) the sealing member 16 to a portion of the closing plate 14 defining a peripheral edge of the electrolytic solution injection hole 15. The sealing member 16 may be connected to the portion of the closing plate 14 (which defines the peripheral edge of the electrolytic solution injection hole 15) by any method known in the art, such as laser welding.

As illustrated in FIG. 3, the closing plate 14 of the battery case 10 includes a protrusion 14a, a recess 14b, a first projection 14c1, and a second projection 14c2. The recess 14b includes a first recess 14b1, a second recess 14b2, and a third recess 14b3. The third recess 14b3 is an example of a fluid retention recess.

The protrusion 14a is provided on a surface of the battery case 10 facing the electrode body assembly 20 (or more specifically, a surface of the closing plate 14 facing the electrode body assembly 20). In other words, the protrusion 14a is provided on an inner surface of the battery case 10 (i.e., a lower surface 14d of the closing plate 14 in FIG. 3). The protrusion 14a protrudes toward the electrode body assembly 20 (i.e., downward in FIG. 3) from a base portion of the closing plate 14 (which is a flat portion of the closing plate 14). Providing the protrusion 14a increases the rigidity of a portion of the closing plate 14 in the vicinity of the electrolytic solution injection hole 15. The present embodiment is thus able to prevent or reduce deformation of the portion of the closing plate 14 in the vicinity of the electrolytic solution injection hole 15. Accordingly, the present embodiment is able to prevent damage to or breakage of a connection W between the closing plate 14 and the sealing member 16, resulting in increased reliability of the connection W.

As is clear from FIGS. 3 and 4, the protrusion 14a has a substantially ring-like outer shape (i.e., a substantially annular outer shape) in the plan view. As illustrated in FIG. 3, the protrusion 14a has an outside diameter R1 larger than the outside diameter of the electrolytic solution injection hole 15. The protrusion 14a is disposed around the electrolytic solution injection hole 15 such that the protrusion 14a surrounds the electrolytic solution injection hole 15. The electrolytic solution injection hole 15 passes through the protrusion 14a in the up-down direction Z. In the present embodiment, the outside diameter R1 of the protrusion 14a is larger than the outside diameter R2 of the sealing member 16. Although the protrusion 14a may have any suitable outside diameter R1, the outside diameter R1 of the protrusion 14a is preferably larger than the outside diameter R2 of the sealing member 16. The present embodiment is thus able to more effectively prevent or reduce deformation of the portion of the closing plate 14 in the vicinity of the electrolytic solution injection hole 15. Alternatively, the outside diameter R1 of the protrusion 14a may be equal to or smaller than the outside diameter R2 of the sealing member 16.

As illustrated in FIG. 3, when viewed in cross section, the ratio of T2 to T1 (T2/T1) is preferably 0.6 or more, and more preferably 0.8 or more (where T1 represents a thickness of the base portion or flat portion of the closing plate 14, and T2 represents a thickness of the protrusion 14a). The ratio (T2/T1) may be about 2 or less (e.g., 1 or less). The thickness T2 of the protrusion 14a is preferably 1 mm or more, and more preferably 1.5 mm or more. The present embodiment is thus able to more effectively prevent or reduce deformation of the portion of the closing plate 14 in the vicinity of the electrolytic solution injection hole 15, achieving the effects of the techniques disclosed herein at higher level.

The recess 14b is provided in an outer surface of the battery case 10 (or more specifically, an outer surface of the closing plate 14). In other words, the recess 14b is provided in an upper surface 14u of the closing plate 14 in FIG. 3. As is clear from FIGS. 3 and 4, the recess 14b is larger in outside diameter than the electrolytic solution injection hole 15 in the plan view. The recess 14b is disposed around the electrolytic solution injection hole 15 such that the recess 14b surrounds the electrolytic solution injection hole 15. In the plan view, the outside diameter of the recess 14b in the present embodiment is larger than the outside diameter R1 of the protrusion 14a. The sealing member 16 is disposed in the recess 14b such that the second recess 14b2 and the third recess 14b3 are covered with the sealing member 16. Disposing the sealing member 16 in the recess 14b makes it possible to reduce the length of protrusion of the sealing member 16 in the up-down direction Z from an upper surface of the battery case 10. The present embodiment thus makes it unlikely that the connection W between the closing plate 14 and the sealing member 16 will protrude from the upper surface of the battery case 10 (or more specifically, the upper surface 14u of the closing plate 14). Accordingly, the present embodiment is able to more effectively prevent damage to or breakage of the connection W caused by interference of the connection W with other member(s). Alternatively, the sealing member 16 may be disposed in or on a portion of the closing plate 14 other than the recess 14b.

The first projection 14c1 is disposed inside the recess 14b. As is clear from FIGS. 3 and 4, the first projection 14c1 has a substantially ring-like outer shape (i.e., a substantially annular outer shape) in the plan view. The substantially ring-like shape of the first projection 14c1 may be partially cut away. The first projection 14c1 is larger in outside diameter than the electrolytic solution injection hole 15. The first projection 14c1 is disposed around the electrolytic solution injection hole 15 such that the first projection 14c1 surrounds the electrolytic solution injection hole 15. As illustrated in FIG. 3, the outside diameter of the first projection 14c1 in the present embodiment is smaller than the outside diameter R1 of the protrusion 14a. The first projection 14c1 has an inside diameter substantially equal to the outside diameter R2 of the sealing member 16. An inner peripheral wall surface of the first projection 14c1 (i.e., a wall surface of the first projection 14c1 located toward the electrolytic solution injection hole 15) extends vertically or substantially vertically from the upper surface 14u. The sealing member 16 is fitted to an inner portion of the first projection 14c1. The first projection 14c1 also functions as a guide indicating a position where the sealing member 16 is to be fitted to the closing plate 14. The first projection 14c1 includes an inner edge flush with an upper surface 16u of the sealing member 16.

The first projection 14c1 is connected to an outer peripheral edge of the sealing member 16. The first projection 14c1 is preferably welded to the outer peripheral edge of the sealing member 16. The connection W is formed along a border between the first projection 14c1 and the outer peripheral edge of the sealing member 16. Providing the first projection 14c1 makes it possible to stabilize the shape of penetration during welding so as to prevent undercutting. The present embodiment is thus able to accurately form the connection W. The connection W has a substantially ring-like shape (i.e., a substantially annular shape) along the first projection 14c1. The connection W may include a substantially ring-shaped portion and a protruding portion projecting from the substantially ring-shaped portion. As illustrated in FIG. 3, the connection W is preferably smaller in thickness than the sealing member 16 when viewed in cross section. In other words, the length of the connection W in the up-down direction Z is preferably shorter than the length of the sealing member 16 in the up-down direction Z.

The recess 14b includes the first recess 14b1 disposed outward of the first projection 14c1. The first recess 14b1 is not covered with the sealing member 16 and is thus exposed externally. Providing the first recess 14b1 improves the workability of forming the connection W. Providing the first recess 14b1 also prevents the connection W from interfering with other member(s) during, for example, battery use so as to prevent damage to or breakage of the connection W.

The second projection 14c2 is disposed inside the recess 14b. The second projection 14c2 is disposed such that the second projection 14c2 faces a surface of the sealing member 16 located toward the electrode body assembly 20 (i.e., an inner surface of the sealing member 16, which is a lower surface 16d of the sealing member 16 in FIG. 3). The second projection 14c2 is preferably in abutment with the lower surface 16d of the sealing member 16. The second projection 14c2 serves as a partition between the second recess 14b2 and the third recess 14b3. As illustrated in FIG. 3, the outside diameter of the second projection 14c2 in the present embodiment is smaller than the outside diameter R1 of the protrusion 14a. The outside diameter of the second projection 14c2 is smaller than the outside diameter R2 of the sealing member 16. Providing the second projection 14c2 stabilizes the position of the sealing member 16. Adjusting the height of the sealing member 16 (i.e., the position of the sealing member 16 in the up-down direction Z), in particular, makes the first projection 14c1 flush with the upper surface 16u of the sealing member 16 with stability.

As is clear from FIGS. 3 and 4, the second projection 14c2 has a substantially ring-like outer shape (i.e., a substantially annular outer shape) in the plan view. Although the second projection 14c2 may have any other suitable outer shape, the second projection 14c2 preferably has a substantially ring-like outer shape. The second projection 14c2 is larger in outside diameter than the electrolytic solution injection hole 15. The second projection 14c2 is disposed inward of the first projection 14c1. The second projection 14c2 is disposed between the outer peripheral edge of the electrolytic solution injection hole 15 and the first projection 14c1. The second projection 14c2 is disposed around the electrolytic solution injection hole 15 such that the second projection 14c2 surrounds the electrolytic solution injection hole 15. Studies conducted by the inventor of the present application reveal that the electrolytic solution may reach an upper end of the electrolytic solution injection hole 15 when the battery 100 is conveyed or restrained before the electrolytic solution injection hole 15 is sealed with the sealing member 16 in the course of manufacture of the battery 100. If the electrolytic solution has reached the upper end of the electrolytic solution injection hole 15, the second projection 14c2 would prevent the first projection 14c1 or the connection W from coming into contact with the electrolytic solution. Accordingly, the present embodiment is able to prevent occurrence of a welding failure so as to further increase the reliability of the connection W.

As illustrated in FIG. 4, the second projection 14c2 is preferably provided with a cut-out N. The second projection 14c2 may be provided with one cut-out N or more than one cut-out N. When the second projection 14c2 is provided with more than one cut-out N, the cut-outs N may be symmetric with respect to a point in the plan view. The cut-out(s) N may function as escape route(s) for gas resulting from volatilization of the electrolytic solution caused by heat during laser welding or gas that has expanded. In the event that the electrolytic solution has reached the second projection 14c2, the electrolytic solution would be returned to the exterior body 12 through the cut-out(s) N. A wall surface of the second projection 14c2 located toward the electrolytic solution injection hole 15 is inclined linearly toward the electrolytic solution injection hole 15. The second projection 14c2 is in the form of a slope. Accordingly, the electrolytic solution that has reached the second projection 14c2 is allowed to flow promptly and suitably to the electrolytic solution injection hole 15, making it difficult for the electrolytic solution to remain in the vicinity of the second projection 14c2.

The second recess 14b2 is disposed outward of the second projection 14c2. A first space S1 is provided in the second recess 14b2. The first space S1 is defined by an outer peripheral wall surface of the second projection 14c2 and the lower surface 16d of the sealing member 16. The first space S1 is surrounded by the second recess 14b2 and the lower surface 16d of the sealing member 16. Specifically, the first space S1 is surrounded by: the upper surface 14u of the closing plate 14; the outer peripheral wall surface of the second projection 14c2; a vertical inner peripheral wall surface of the first projection 14c1; and the lower surface 16d of the sealing member 16. The first space S1 preferably has a substantially ring-like outer shape (i.e., a substantially annular outer shape) in the plan view. The first space S1 is at least partially located directly below the connection W. The first space S1 may function as a reservoir to store the electrolytic solution that has flowed into a gap between the second projection 14c2 and the lower surface 16d of the sealing member 16. The present embodiment is thus able to prevent the electrolytic solution from making its way up to the first projection 14c1 or the connection W along the lower surface 16d of the sealing member 16. The first space S1 preferably has a volume of 2 mm³ or more, and more preferably has a volume of 5 mm³ or more.

The third recess 14b3 is disposed inward of the second projection 14c2 (i.e., disposed closer to the electrolytic solution injection hole 15 than the second projection 14c2). When viewed in cross section (see FIG. 3), an extension of the bottom or base portion of the third recess 14b3 (i.e., a flat portion of the third recess 14b3) defines a border between the electrolytic solution injection hole 15 and a space located directly above the electrolytic solution injection hole 15. A second space S2 is provided in the third recess 14b3. The second space S2 is defined by the lower surface 16d of the sealing member 16. The second space S2 is surrounded by the third recess 14b3 and the lower surface 16d of the sealing member 16. The second space S2 is in communication with the electrolytic solution injection hole 15. The second space S2 may function as a reservoir to store the electrolytic solution that has reached the upper end of the electrolytic solution injection hole 15. Providing the third recess 14b3 makes it difficult for the electrolytic solution to reach the second projection 14c2, which eventually makes it possible to prevent the electrolytic solution from adhering to the connection W. The second space S2 is preferably larger in volume than the first space S1. The second space S2 preferably has a volume of 30 mm³ or more, and more preferably has a volume of 50 mm³ or more.

As illustrated in FIG. 3, the inner surface of the sealing member 16 (which is the lower surface 16d of the sealing member 16 in FIG. 3) is centrally provided with a central projection 16a protruding toward the electrolytic solution injection hole 15. The central projection 16a has a substantially circular outer shape. As illustrated in FIG. 3, the central projection 16a is smaller in outside diameter than the electrolytic solution injection hole 15. The central projection 16a is located directly above the electrolytic solution injection hole 15. The central projection 16a includes a lower end located above the upper end of the electrolytic solution injection hole 15. A central recess 16b is provided in an outer surface of the sealing member 16 (i.e., the upper surface 16u of the sealing member 16 in FIG. 3) such that the central recess 16b is located opposite to the central projection 16a in the up-down direction Z. The present embodiment thus makes it unlikely that the sealing member 16 will deform during an increase in internal pressure, resulting in further improved reliability of the connection W.

The electrolytic solution may be similar to any electrolyte solution known in the art or any other suitable electrolytic solution. The electrolytic solution is typically a nonaqueous electrolytic solution containing a nonaqueous solvent and a supporting electrolyte (or electrolytic salt). Alternatively, the electrolytic solution may be an aqueous electrolytic solution containing a water solvent. Examples of the nonaqueous solvent include carbonates, such as ethylene carbonate, dimethyl carbonate, and ethyl methyl carbonate. The nonaqueous solvent preferably contains carbonates. The nonaqueous solvent particularly preferably contains cyclic carbonate and chain carbonate. Examples of the supporting electrolyte include a fluorine-containing lithium salt, such as lithium hexafluorophosphate (LiPF₆). The electrolytic solution may further contain additive(s) when necessary.

The positive electrode terminal 30 is disposed on a first end of the closing plate 14 in the long-side direction Y (i.e., the left end of the closing plate 14 in FIGS. 1 and 2). The negative electrode terminal 40 is disposed on a second end of the closing plate 14 in the long-side direction Y (i.e., the right end of the closing plate 14 in FIGS. 1 and 2). As illustrated in FIG. 2, the positive electrode terminal 30 is inserted through the through hole 18 such that the positive electrode terminal 30 extends from inside to outside of the closing plate 14, and the negative electrode terminal 40 is inserted through the through hole 19 such that the negative electrode terminal 40 extends from inside to outside of the closing plate 14. The present embodiment involves performing swaging processes such that the positive electrode terminal 30 is swaged to a portion of the closing plate 14 surrounding the through hole 18, and the negative electrode terminal 40 is swaged to a portion of the closing plate 14 surrounding the through hole 19. An end of the positive electrode terminal 30 located adjacent to the electrode body assembly 20 (i.e., the lower end of the positive electrode terminal 30 in FIG. 2) is provided with a swaged portion 30c. An end of the negative electrode terminal 40 located adjacent to the electrode body assembly 20 (i.e., the lower end of the negative electrode terminal 40 in FIG. 2) is provided with a swaged portion 40c.

As illustrated in FIG. 2, the positive electrode terminal 30 is electrically connected to positive electrodes (not illustrated) of the electrode body assembly 20 through the positive electrode collector 50 inside the exterior body 12. The negative electrode terminal 40 is electrically connected to negative electrodes (not illustrated) of the electrode body assembly 20 through the negative electrode collector 60 inside the exterior body 12. The positive electrode terminal 30 is insulated from the closing plate 14 by an internal insulator 80 and a gasket 90. The negative electrode terminal 40 is insulated from the closing plate 14 by another internal insulator 80 and another gasket 90.

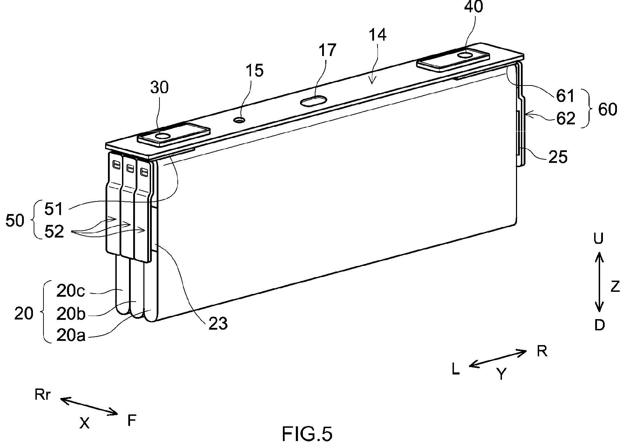

FIG. 5 is a schematic perspective view of the electrode body assembly 20 attached to the closing plate 14. The electrode body assembly 20 includes a plurality of electrode bodies. The electrode bodies may each be similar in structure and form to any electrode body known in the art, or may each have any other suitable structure and form. In the present embodiment, the electrode body assembly 20 includes three electrode bodies, i.e., electrode bodies 20a, 20b, and 20c. Alternatively, any other suitable number of electrode bodies may be disposed inside the single exterior body 12. The number of electrode bodies disposed inside the single exterior body 12 may be one, two, or four or more. When more than one electrode body is disposed inside the single exterior body 12, the closing plate 14 increases in size and/or the amount of electrolytic solution increases, making it likely that an increase in internal pressure will occur. Accordingly, the use of the techniques disclosed herein is particularly effective in solving this problem. In the present embodiment, the electrode bodies 20a, 20b, and 20c are electrically connected in parallel to each other. The electrode bodies 20a, 20b, and 20c each have a flat outer shape. In the present embodiment, each of the electrode bodies 20a, 20b, and 20c is a wound electrode body. The electrode bodies 20a, 20b, and 20c are disposed inside the exterior body 12 such that the winding axes of the electrode bodies 20a, 20b, and 20c are substantially parallel to the long-side direction Y.

Although not illustrated, the electrode bodies 20a, 20b, and 20c each include a positive electrode, a negative electrode, and a separator. In the present embodiment, the electrode bodies 20a, 20b, and 20c are each provided by placing a strip-shaped positive electrode and a strip-shaped negative electrode on top of another, with a strip-shaped separator interposed therebetween, and winding the positive and negative electrodes and the separator around the winding axis. The winding axis is substantially parallel to the long-side direction Y. Alternatively, the electrode bodies 20a, 20b, and 20c may each be a laminated electrode body including quadrangular positive electrodes (which are typically rectangular positive electrodes) and quadrangular negative electrodes (which are typically rectangular negative electrodes), which are stacked on top of another such that the positive and negative electrodes are insulated from each other.

The positive electrodes may each be similar to any positive electrode known in the art or any other suitable positive electrode. Each of the positive electrodes typically includes a positive electrode core and a positive electrode active material layer fixed onto at least one of surfaces of the positive electrode core. The positive electrode core has a strip shape. The positive electrode core is preferably made of metal. The positive electrode core is more preferably made of metallic foil. In the present embodiment, the positive electrode core is made of aluminum foil. The positive electrode core includes a positive electrode tab assembly 23 provided by stacking positive electrode tabs protruding toward a first side in the long-side direction Y (i.e., leftward in FIGS. 2 and 5). The positive electrode tab assembly 23 is electrically connected to the positive electrode terminal 30 through the positive electrode collector 50. The positive electrode active material layer contains a positive electrode active material that is able to reversibly store and discharge charge carriers. Examples of the positive electrode active material include a lithium transition metal composite oxide. The positive electrode active material layer may contain any of various additive components, such as a binder and a conductive material, in addition to the positive electrode active material.

The negative electrodes may each be similar to any negative electrode known in the art or any other suitable negative electrode. Each of the negative electrodes typically includes a negative electrode core and a negative electrode active material layer fixed onto at least one of surfaces of the negative electrode core. The negative electrode core has a strip shape. The negative electrode core is preferably made of metal. The negative electrode core is more preferably made of metallic foil. In the present embodiment, the negative electrode core is made of copper foil. The negative electrode core includes a negative electrode tab assembly 25 provided by stacking negative electrode tabs protruding toward a second side in the long-side direction Y (i.e., rightward in FIGS. 2 and 5). The negative electrode tab assembly 25 is electrically connected to the negative electrode terminal 40 through the negative electrode collector 60. The negative electrode active material layer contains a negative electrode active material that is able to reversibly store and discharge charge carriers. Examples of the negative electrode active material include a carbon material, such as graphite. The negative electrode active material layer may contain any of various additive components, such as a binder, a thickener, and a dispersant, in addition to the negative electrode active material.

The separators are disposed between the positive and negative electrodes. The separators insulate the positive and negative electrodes from each other. Preferable examples of the separators include a porous resin sheet made of polyolefin resin, such as polyethylene (PE) or polypropylene (PP).

As illustrated in FIGS. 2 and 5, the positive electrode collector 50 defines a conductive path through which the positive electrode tab assembly 23 is electrically connected to the positive electrode terminal 30. The positive electrode collector 50 includes a first positive electrode collector 51 and second positive electrode collectors 52. The first positive electrode collector 51 is attached to an inner surface of the closing plate 14. The second positive electrode collectors 52 extend along the associated short side wall 12c of the exterior body 12. The second positive electrode collectors 52 are each disposed adjacent to an associated one of the electrode bodies 20a, 20b, and 20c.

As illustrated in FIGS. 2 and 5, the negative electrode collector 60 defines a conductive path through which the negative electrode tab assembly 25 is electrically connected to the negative electrode terminal 40. The negative electrode collector 60 includes a first negative electrode collector 61 and second negative electrode collectors 62. The first negative electrode collector 61 may be similar in structure to the first positive electrode collector 51. The second negative electrode collectors 62 may be similar in structure to the second positive electrode collectors 52.

### Method for Manufacturing Battery 100

The battery 100 may be manufactured by, for example, a manufacturing method that involves preparing the battery case 10 (i.e., the exterior body 12 and the closing plate 14), the sealing member 16, the electrode body assembly 20, the positive electrode terminal 30, the negative electrode terminal 40, the positive electrode collector 50, the negative electrode collector 60, and the electrolytic solution (not illustrated), which have been described above, and that includes a housing step and a closing step.

In one example, the housing step first involves: connecting the second positive electrode collectors 52 to the positive electrode tab assembly 23 of the electrode body assembly 20; and connecting the second negative electrode collectors 62 to the negative electrode tab assembly 25 of the electrode body assembly 20. The housing step then involves attaching the positive electrode terminal 30, the negative electrode terminal 40, the first positive electrode collector 51, and the first negative electrode collector 61 to the closing plate 14. The closing plate 14, the positive electrode terminal 30, the negative electrode terminal 40, and the electrode body assembly 20 are thus integral with each other. The housing step subsequently involves: housing the electrode body assembly 20 (which is integral with the closing plate 14) in an internal space of the exterior body 12; and sealing the opening 12h of the exterior body 12 with the closing plate 14. The opening 12h of the exterior body 12 is sealed by, for example, welding (e.g., laser-welding) the closing plate 14 to the exterior body 12.

The closing step first involves injecting the electrolytic solution into the battery case 10 through the electrolytic solution injection hole 15. The closing step then involves connecting the sealing member 16 to the portion of the closing plate 14 defining the peripheral edge of the electrolytic solution injection hole 15, such that the connection W is formed. The electrolytic solution injection hole 15 is thus sealed with the sealing member 16 such that the battery 100 is hermetically closed. In one example, the connection W is a welded connection formed by laser welding that involves applying laser light to an interface between the closing plate 14 and the sealing member 16. When the connection W having a ring shape is to be formed along the first projection 14c1, the closing step preferably involves performing two or more separate welding processes such that the ring-shaped connection W is formed. Performing separate welding processes facilitates escape of gas resulting from volatilization of the electrolytic solution caused by heat during laser welding. This makes it possible to prevent occurrence of a welding failure.

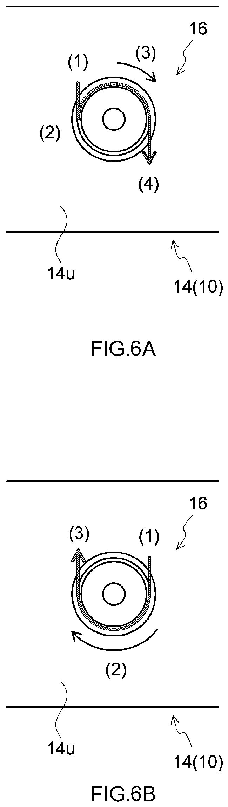

FIGS. 6A and 6B are diagrams schematically illustrating how laser welding is to be performed. FIG. 6A illustrates a welding track during a first laser welding process. FIG. 6B illustrates a welding track during a second laser welding process. As illustrated in FIG. 6A, the first laser welding process in the present embodiment starts at a position away from the interface between the closing plate 14 and the sealing member 16 and involves applying laser light such that the laser light creates a track in the form of a line extending to the interface between the closing plate 14 and the sealing member 16 (see (1) in FIG. 6A). The first laser welding process subsequently involves applying laser light such that the laser light goes back (see (2) in FIG. 6A) and then creates a track in the form of a semicircle (see (3) in FIG. 6A). The first laser welding process then ends at a position away from the interface (see (4) in FIG. 6A). As illustrated in FIG. 6B, the second laser welding process starts at a position away from the interface between the closing plate 14 and the sealing member 16 (see (1) in FIG. 6B). The second laser welding process subsequently involves applying laser light such that the laser light creates a track in the form of a semicircle along the interface between the closing plate 14 and the sealing member 16 (see (2) in FIG. 6B). The second laser welding process then ends at a position away from the interface (see (3) in FIG. 6B).

Starting a welding process at a position away from the interface between the closing plate 14 and the sealing member 16 and then ending the welding process at a position away from the interface as descried above makes it possible to prevent excessively intensive application of laser light to start and end points. Accordingly, the present embodiment is able to prevent creation of hole(s) in the battery case 10 (or more specifically, the closing plate 14) and/or the sealing member 16) and thus enables the battery 100 to have sufficient airtightness. In the present embodiment, the first and second laser welding processes involve creating different welding tracks. Alternatively, the laser welding process illustrated in FIG. 6A, for example, may be performed twice so as to form the connection W having a ring shape, or the laser welding process illustrated in FIG. 6B, for example, may be performed twice so as to form the connection W having a ring shape. Optionally, three or more separate laser welding processes may be performed.

### Purpose of Use of Battery 100

The battery 100 is usable for various purposes. The battery 100 is suitably usable as a motor power source (e.g., a driving power source) to be installed on, for example, a vehicle (such as a passenger car or a truck). The battery 100 may be installed on any type of vehicle, examples of which include, but are not limited to, a plug-in hybrid electric vehicle (PHEV), a hybrid electric vehicle (HEV), and a battery electric vehicle (BEV).

Although the preferred embodiment of the present application has been described thus far, the foregoing embodiment is only illustrative. The present application may be embodied in various other forms. The present application may be practiced based on the disclosure of this specification and technical common knowledge in the related field. The techniques described in the claims include various changes and modifications made to the embodiment illustrated above. Any or some of the technical features of the foregoing embodiment, for example, may be replaced with any or some of the technical features of variations of the foregoing embodiment. Any or some of the technical features of the variations may be added to the technical features of the foregoing embodiment. Unless described as being essential, the technical feature(s) may be optional.

As illustrated in FIG. 3, for example, the foregoing embodiment involves forming the connection W smaller in thickness than the sealing member 16. In other words, the foregoing embodiment involves forming the connection W such that the connection W does not reach the first space S1. Alternatively, the connection W may have any other suitable thickness. In one variation, the connection W may be greater in thickness than the sealing member 16 such that the connection W reaches the first space S1. In another variation, the connection W may be longer in length than the vertical inner peripheral wall surface of the first projection 14c1. Studies conducted by the inventor of the present application suggest that if laser welding is performed, with the electrolytic solution present in the first space S1, a welding failure would be unlikely to occur because the closing plate 14 and the sealing member 16 are spaced from each other by the first space S1.

### REFERENCE SIGNS LIST

- 10: battery case
- 12: exterior body
- 14: closing plate
- 14a: protrusion
- 14b: recess
- 14c1: first projection
- 14c2: second projection
- 15: electrolytic solution injection hole
- 16: sealing member
- 20: electrode body assembly
- 20a, 20b, 20c: electrode body
- 100: battery

## Claims

1. A battery (100) comprising:
an electrode body (20a) including a positive electrode and a negative electrode;
an electrolytic solution;
a battery case (10) housing the electrode body (20a), storing the electrolytic solution, and including an electrolytic solution injection hole (15); and
a sealing member (16) connected to a portion of the battery case (10) defining a peripheral edge of the electrolytic solution injection hole (15), such that the electrolytic solution injection hole (15) is sealed with the sealing member (16), wherein
a surface (14d) of the battery case (10) facing the electrode body (20a) includes a protrusion (14a) located around the electrolytic solution injection hole (15) and protruding toward the electrode body (20a),
the battery case (10) includes a closing plate (14) provided with the electrolytic solution injection hole (15) and defining the surface (14d), and the sealing member (16) includes a connection (W) where the sealing member (16) and the closing plate (14) are connected by welding,
an outer surface (14u) of the closing plate (14) includes a recess (14b), and the electrolytic solution injection hole (15) is disposed adjacent to the recess (14b),
the recess (14b) is provided with a second projection (14c2) located around the electrolytic solution injection hole (15) and facing a surface (16d) of the sealing member (16) located toward the electrode body (20a),
in a plan view of the outer surface (14u) of the closing plate (14), the second projection (14c2) has a substantially annular outer shape,
a second recess (14b2) is disposed outward of the second projection (14c2),
a third recess (14b3) is disposed inward of the second projection (14c2), an extension of a bottom portion of the third recess (14b3) defines a border between the electrolytic solution injection hole (15) and a space located directly above the electrolytic solution injection hole (15).

2. The battery (100) according to claim 1, wherein
the recess (14b) is provided with a first projection (14c1) surrounding the electrolytic solution injection hole (15), and
an outer peripheral edge of the sealing member (16) is welded to the first projection (14c1).

3. The battery (100) according to claim 1 or 2, wherein
the second projection (14c2) has a substantially ring-like shape in a plan view.

4. The battery (100) according to any one of claims 1 to 3, wherein
the second projection (14c2) is provided with a cut-out (N).

5. The battery (100) according to any one of claims 1 to 4, further comprising a first space (S1) defined by:
an outer peripheral wall surface of the second projection (14c2) of the battery case (10); and
the surface (16d) of the sealing member (16) located toward the electrode body (20a).

6. The battery (100) according to any one of claims 1 to 5, wherein
the recess (14b) includes a fluid retention recess (14b3) located closer to the electrolytic solution injection hole (15) than the second projection (14c2).

7. The battery (100) according to any one of claims 1 to 6, wherein
an outside diameter (R1) of the protrusion (14a) is larger than an outside diameter (R2) of the sealing member (16).

## Patentansprüche

1. Batterie (100), aufweisend:
einen Elektrodenkörper (20a), der eine positive Elektrode und eine negative Elektrode beinhaltet;
eine Elektrolytlösung;
ein Batteriegehäuse (10), in dem der Elektrodenkörper (20a) untergebracht, die Elektrolytlösung aufgenommen und eine Elektrolytlösungs-Einspritzöffnung (15) enthalten ist; und
ein Dichtungselement (16), das mit einem Abschnitt des Batteriegehäuses (10) verbunden ist, der eine Umfangskante der Elektrolytlösungs-Einspritzöffnung (15) definiert, so dass die Elektrolytlösungs-Einspritzöffnung (15) mit dem Dichtungselement (16) abgedichtet ist, wobei
eine dem Elektrodenkörper (20a) zugewandte Oberfläche (14d) des Batteriegehäuses (10) einen Vorsprung (14a) beinhaltet, der um die Elektrolytlösungs-Einspritzöffnung (15) herum angeordnet ist und in Richtung des Elektrodenkörpers (20a) vorsteht,
das Batteriegehäuse (10) eine Verschlussplatte (14) beinhaltet, die mit der Elektrolytlösungs-Einspritzöffnung (15) versehen ist und die Oberfläche (14d) definiert, und das Dichtungselement (16) eine Verbindung (W) umfasst, an der das Dichtungselement (16) und die Verschlussplatte (14) durch Schweißen verbunden sind,
eine äußere Oberfläche (14u) der Verschlussplatte (14) eine Aussparung (14b) umfasst und die Elektrolytlösungs-Einspritzöffnung (15) benachbart zu der Aussparung (14b) angeordnet ist,
die Aussparung (14b) mit einem zweiten Vorsprung (14c2) versehen ist, der um die Elektrolytlösungs-Einspritzöffnung (15) herum angeordnet ist und einer Oberfläche (16d) des Dichtungselements (16) zugewandt ist, die in Richtung des Elektrodenkörpers (20a) angeordnet ist,
in einer Draufsicht auf die äußere Oberfläche (14u) der Verschlussplatte (14) der zweite Vorsprung (14c2) eine im Wesentlichen ringförmige äußere Gestalt aufweist,
eine zweite Aussparung (14b2) außerhalb des zweiten Vorsprungs (14c2) angeordnet ist,
eine dritte Aussparung (14b3) innerhalb des zweiten Vorsprungs (14c2) angeordnet ist,
eine Erweiterung eines Bodenabschnitts der dritten Aussparung (14b3) eine Grenze zwischen der Elektrolytlösungs-Einspritzöffnung (15) und einem Raum definiert, der sich direkt über der Elektrolytlösungs-Einspritzöffnung (15) befindet.

2. Batterie (100) nach Anspruch 1, wobei
die Aussparung (14b) mit einem ersten Vorsprung (14c1) versehen ist, der die Elektrolytlösungs-Einspritzöffnung (15) umgibt, und
eine äußere Umfangskante des Dichtungselements (16) mit dem ersten Vorsprung (14c1) verschweißt ist.

3. Batterie (100) nach Anspruch 1 oder 2, wobei
der zweite Vorsprung (14c2) in einer Draufsicht eine im Wesentlichen ringartige Gestalt aufweist.

4. Batterie (100) nach einem der Ansprüche 1 bis 3, wobei
der zweite Vorsprung (14c2) mit einem Ausschnitt (N) versehen ist.

5. Batterie (100) nach einem der Ansprüche 1 bis 4, die ferner einen ersten Raum (S1) aufweist, der definiert ist durch:
eine äußere Umfangswandoberfläche des zweiten Vorsprungs (14c2) des Batteriegehäuses (10); und
die Oberfläche (16d) des Dichtungselements (16), die in Richtung des Elektrodenkörpers (20a) angeordnet ist.

6. Batterie (100) nach einem der Ansprüche 1 bis 5, wobei
die Aussparung (14b) eine Fluidrückhalteaussparung (14b3) umfasst, die näher an der Elektrolytlösungs-Einspritzöffnung (15) angeordnet ist als der zweite Vorsprung (14c2).

7. Batterie (100) nach einem der Ansprüche 1 bis 6, wobei
ein Außendurchmesser (R1) des Vorsprungs (14a) größer ist als ein Außendurchmesser (R2) des Dichtungselements (16).

## Revendications

1. Une batterie (100) comprenant :
un corps d'électrode (20a) comprenant une électrode positive et une électrode négative ;
une solution électrolytique ;
un boîtier de batterie (10) logeant le corps d'électrode (20a), stockant la solution électrolytique et comprenant un trou d'injection de solution électrolytique (15) ; et
un élément d'étanchéité (16) relié à une partie du boîtier de batterie (10) définissant un bord périphérique du trou d'injection de solution électrolytique (15), de telle sorte que le trou d'injection de solution électrolytique (15) soit scellé avec l'élément d'étanchéité (16), dans laquelle
une surface (14d) du boîtier de batterie (10) faisant face au corps d'électrode (20a) comprend une saillie (14a) située autour du trou d'injection de solution électrolytique (15) et faisant saillie vers le corps d'électrode (20a),
le boîtier de batterie (10) comprend une plaque de fermeture (14) pourvue du trou d'injection de solution électrolytique (15) et définissant la surface (14d), et l'élément d'étanchéité (16) comprend une connexion (W) où l'élément d'étanchéité (16) et la plaque de fermeture (14) sont reliés par soudage,
une surface extérieure (14u) de la plaque de fermeture (14) comprend un renfoncement (14b), et le trou d'injection de solution électrolytique (15) est disposé à proximité du renfoncement (14b),
le renfoncement (14b) est muni d'une deuxième saillie (14c2) située autour du trou d'injection de solution électrolytique (15) et faisant face à une surface (16d) de l'élément d'étanchéité (16) située vers le corps d'électrode (20a),
dans une vue en plan de la surface extérieure (14u) de la plaque de fermeture (14), la deuxième saillie (14c2) a une forme extérieure sensiblement annulaire,
un deuxième renfoncement (14b2) est disposé à l'extérieur de la deuxième saillie (14c2),
un troisième renfoncement (14b3) est disposé à l'intérieur de la deuxième saillie (14c2), une extension d'une partie inférieure du troisième renfoncement (14b3) définit une bordure entre le trou d'injection de solution électrolytique (15) et un espace situé directement au-dessus du trou d'injection de solution électrolytique (15).

2. La batterie (100) selon la revendication 1, dans laquelle
le renfoncement (14b) est muni d'une première saillie (14c1) entourant le trou d'injection de solution électrolytique (15), et
un bord périphérique extérieur de l'élément d'étanchéité (16) est soudé à la première saillie (14c1).

3. La batterie (100) selon la revendication 1 ou 2, dans laquelle
la deuxième saillie (14c2) a une forme sensiblement annulaire en vue en plan.

4. La batterie (100) selon l'une quelconque des revendications 1 à 3, dans laquelle
la deuxième saillie (14c2) est pourvue d'une découpe (N).

5. La batterie (100) selon l'une des revendications 1 à 4, comprenant en outre un premier espace (S1) défini par :
une surface de paroi périphérique extérieure de la deuxième saillie (14c2) du boîtier de batterie (10) ; et
la surface (16d) de l'élément d'étanchéité (16) située vers le corps d'électrode (20a).

6. La batterie (100) selon l'une des revendications 1 à 5, dans laquelle
le renfoncement (14b) comprend un renfoncement de rétention de fluide (14b3) situé plus près du trou d'injection de solution électrolytique (15) que la deuxième saillie (14c2).

7. La batterie (100) selon l'une des revendications 1 à 6, dans laquelle
le diamètre extérieur (R1) de la saillie (14a) est supérieur au diamètre extérieur (R2) de l'élément d'étanchéité (16).
